# EUROPÄISCHE PATENTSCHRIFT

(11) **EP 0 582 864 B1**
(45) Veröffentlichungstag und Bekanntmachung des Hinweises auf die Patenterteilung: **05.03.1997**
(21) Anmeldenummer: 93111629.7
(22) Anmeldetag: 21.07.1993
(51) Int. Cl.: C09D 5/10, C09D 183/02

(54) **Bindemittel für lagerfähige Überzugsmassen**
Binder for storable coating
Liant pour composition de revêtements stockables

(30) Priorität: 11.08.1992 DE 4226546
(43) Veröffentlichungstag der Anmeldung: 16.02.1994
(73) Patentinhaber: HÜLS AKTIENGESELLSCHAFT, 45764 Marl (DE)
(72) Erfinder: Fliedner, Christine, Dr., D-53127 Bonn (DE); Schnippering, Friedhelm, D-53721 Siegburg-Braschoss (DE); Rödder, Karl-Martin, verstorben (DE); Matthes, Reinhard, Dr., D-51427 Bergisch Gladbach (DE)

(56) Entgegenhaltungen:
- EP-A- 0 030 762
- EP-A- 0 039 008
- EP-A- 0 490 433
- FR-A- 2 372 213
- US-A- 3 859 101

## Beschreibung

Die Erfindung betrifft Bindemittel für lagerfähige Überzugsmassen (Beschichtungsmassen) auf der Basis einer Mischung von Kieselsäureestern, Lösungsmitteln, Härtern und eines Antiabsetzmittels mit einem Flammpunkt der Mischung von mehr als 21°C.
Bindemittel für Feststoffteilchen auf der Basis von Hydrolysaten von Kieselsäureestern bzw. Kieselsäuregelen sind bekannt. Derartige Bindemittel werden in der Farbenindustrie eingesetzt. Durch Pigmentieren solcher Bindemittel, z.B. mit Zinkstaub, erhält man Anstrichfarben (Zinkstaubfarben) für die korrosionsbeständige Beschichtung von Metallen, insbesondere Eisen und Stahl. Die ausgehärteten Beschichtungen zeichnen sich durch eine hohe Oberflächenhärte und somit ausgezeichnete Abriebfestigkeit, gute Lösungsmittel- und Temperaturbeständigkeit sowie elektrische Leitfähigkeit aus.

Am Anfang der Entwicklungsreihe der Zinkstaubfarben auf Basis von Kieselsäuregelen standen die Zweikomponenten-Systeme: Die eine Komponente ist im einfachsten Fall ein Hydrolysat von Ethylsilikat in alkoholischer Lösung als Bindemittel, die andere der Zinkstaub. Beide Komponenten werden erst unmittelbar vor der Anwendung gemischt, da sich nach der Zumischung des Zinkstaubs die Beschichtungsmasse innerhalb weniger Stunden verfestigt (US-PS 3 056 684). Die folgenden Entwicklungen machten sich den Einfluß verschiedener Zusatzstoffe auf die Verarbeitbarkeit und Qualität der Anstriche zunutze, z.B. durch Zusätze von Polyvinylbutyral (US-PS 392 130), von Borsäureestern (US-PS 3 392 036), von Alkyltitanaten (US-PS 3 442 824, US-PS 3 546 155) oder von Trialkylphosphaten (DE-PS 2 000 199). Zur Erhöhung des Flammpunktes der Bindemittel wurde Ethylsilikat mit höheren Alkoholen umgeestert (US-PS 3 730 743). Zweikomponenten-Zinkstaubfarben besitzen jedoch bezüglich ihrer Anwendung einige Nachteile. Aufgrund der getrennten Lagerung von Bindemittel und Zinkstaub bestehen Nachteile hinsichtlich der Lagerhaltung. Einmal angesetzte Mischungen müssen innerhalb weniger Stunden sofort und vollständig aufgearbeitet werden. Des weiteren verändern sich durch Alterung des Hydrolysats im Verlauf der Lagerung wichtige anwendungstechnische Parameter, wie Verarbeitungseigenschaften (z.B. Viskosität) und Reaktivität (Einfluß auf Aushärtungsgeschwindigkeit), so daß bei der Anwendung von Zinkstaubfarben unter Verwendung von Bindemitteln unterschiedlichen Alters erhebliche Schwierigkeiten entstehen können.

Aufgrund der genannten Nachteile wurden in der Folgezeit die sogenannten Einkomponenten-Systeme entwickelt. Diese sollten insbesondere die Stabilität der Mischung von Bindemittel, Pigmenten und Füllstoffen im Gebinde verbessern. Wegen der hohen Dichte von Zink und der niedrigen Viskosität des Alkylsilikats setzte sich der Zinkstaub bei der Lagerung in geschlossenen Gebinden derart am Boden ab, daß die gebildeten Niederschläge nicht mehr oder nur schwer aufrührbar waren. Durch die Verwendung spezieller rheologischer Additive, wie z.B. BENTONE oder pyrogene Kieselsäure, wurde die Herstellung von Einkomponenten-Zinkstaubfarben möglich, die auch nach mehreren Monaten ohne Schwierigkeiten einsetzbar sind. Es handelt sich um Formulierungen, die unhydrolysierte Kieselsäureester enthalten und erst unter Einwirkung von Luftfeuchtigkeit durch Hydrolyse und Kondensation zu einem zunehmend vernetzten SiO₂-Gel abreagieren (US-PS 3 859 101, DE-PS 26 54 036). Durch alkalisch reagierende Substanzen, zum Beispiel Amine oder Alkoholate, wird der Hydrolyse- und Kondensationsvorgang katalysiert.

Die bekannten Bindemittel weisen auf Grund der Verwendung von Alkoholen, Ketonen, Ethern und Alkylestern niederer Carbonsäuren als Lösungsmittel bzw. -gemische einen Flammpunkt auf, der oft weniger als 21°C beträgt. Da bei der Anwendung der Zinkstaubfarbe durch Hydrolyse geringe Mengen Alkohol frei werden, ist es schwierig, bei Bindemitteln auf der Basis von Ethylsilikat einen Flammpunkt zu erreichen, der größer als 21°C ist. Dies trifft auch zu, wenn Lösungsmittel oder Lösungsmittelgemische eingesetzt werden, die ursprünglich einen Flammpunkt von wesentlich mehr als 21°C aufweisen. Bei Verwendung von Xylol als Lösungsmittel liegt der Flammpunkt des Bindemittels bei 23°C (EP-PS 0 039 008). Bei Einsatz der Propyl- oder Butylsilikate entstehen ebenfalls Systeme mit höheren Flammpunkten. In beiden Fällen wird jedoch infolge der langsameren Verdunstung des Lösungsmittels (Xylol bzw. entstehende Alkohole) und wegen des veränderten Hydrolyseverhaltens der veresterten Kieselsäuregruppen die Anfangsaushärtung der Farben verzögert.

Es bestand daher das Problem, Bindemittel auf der Basis einer Mischung von Kieselsäureestern, Lösungsmitteln, Härtern und eines Antiabsetzmittels mit einem Flammpunkt der Mischung von mehr als 21°C zu finden, welche die erwähnten Nachteile nicht aufweisen.
Dieses Problem wurde durch den Einsatz von n-Butylacetat und Styrolcopolymeren gelöst.
Die erfindungsgemäßen Bindemittel weisen gegenüber herkömmlichen Bindemitteln auf der Basis von Kieselsäureestern einen erhöhten Flammpunkt auf. Sie zeichnen sich des weiteren durch gute rheologische Eigenschaften aus. Das rheologisch wirksame Antiabsetzmittel ist in den gemäß der Erfindung eingesetzten Lösungsmitteln gut löslich. Das erfindungsgemäße Bindemittel bildet eine Komponente für die Herstellung von Beschichtungsmassen. Es liefert mit Zinkstaub bzw. Zinkstaubmischungen Beschichtungsmassen, die unter der Bezeichnung Zinkstaubfarben bekannt sind. Aber auch andere herkömmliche anorganische Pigmente oder Füllstoffe sind mit dem erfindungsgemäBen Bindemittel verträglich, wie z.B. Eisenoxid, Chromoxid, Titandioxid, Eisenglimmer, Bariumsulfat, Kaolin, Talkum, Glimmer oder Mullit. Sämtliche Anstrichfarben sind in geschlossenen Gebinden über einen längeren Zeitraum haltbar. Die während der Lagerung sich gegebenenfalls absetzenden Pigmente bzw. Pigmentmischungen sind leicht zu einer gleichmäßigen Suspension aufrührbar. Innerhalb des üblichen Verarbeitungszeitraumes setzen sich die Pigmente nicht ab, das heißt, ein zusätzliches Rühren ist nicht erforderlich. Die Farben lassen sich in herkömmlicher Weise, z.B. durch Spritzen oder Streichen, gut auftragen und ergeben schnell aushärtende (trocknende) Beschichtungen mit einem hervorragenden Korrosionsschutz. Die Härte der Beschichtungen entsprechend dem Erichsenstab beträgt nach 2 Stunden mehr als 150 und nach 4 Stunden 250 bis 300. Des weiteren sind die auf der Basis des erfindungsgemäßen Bindemittels hergestellten Anstrichfarben mit einer großen Reihe von Deckbeschichtungen auf Basis organischer Harze verträglich.

Die im erfindungsgemäßen Bindemittel eingesetzten Kieselsäureester sind monomere Kieselsäureester oder oligomere Kieselsäureester mit 2 bis 10 Si-Atomen. Die monomeren Kieselsäureester entsprechen der Summenformel Si(OR')₄, wobei R' einen Alkylrest mit 2 bis 4 Kohlenstoffatomen bedeutet. Die Kieselsäureester liegen im erfindungsgemäßen Bindemittel in unhydrolysierter Form vor. Bevorzugte Kieselsäureester sind oligomere Ethylsilikate mit einem SiO₂-Gehalt von 18 bis 50 Gew.-%, vorzugsweise von 24 bis 40 Gew. -%.

Als Lösungsmittel für die erfindungsgemäßen Bindemittel werden vorzugsweise Ester und aromatische Kohlenwasserstoffe eingesetzt. Hierbei ist n-Butylacetat in jedem Fall enthalten. Das Lösungsmittel kann ausschließlich n-Butylacetat sein. Der Gehalt an n-Butylacetat beträgt bevorzugt 6 bis 60 Gew.-%, bezogen auf das Gesamtgewicht des Bindemittels. Die genannten Lösungsmittel werden dem Kieselsäureester vorzugsweise als Lösungsmittelgemisch zugesetzt. Besonders bevorzugt wird ein Gemisch aus n-Butylacetat und aromatischen Lösungsmitteln - wobei letztere im Handel unter dem Namen SOLVESSO 100 erhältlich sind - im Gewichtsverhältnis 1 : 5 bis 5 : 1. Dieses Gewichtsverhältnis beträgt in einer weiter bevorzugten Ausführungsform der Erfindung 2 : 1 bis 3 : 1. Der Lösungsmittelgehalt des erfindungsgemäßen Bindemittels beträgt vorzugsweise 40 bis 70 Gew.-%, bezogen auf das Gesamtgewicht des Bindemittels.

Als in den erfindungsgemäßen Bindemitteln rheologisch wirksame Antiabsetzmittel haben sich Styrolcopolymere erwiesen. Bevorzugt werden Styrol/Acrylat-Copolymere oder Polymerisate auf Basis von Methacrylsäureestern oder i-Butylmethacrylat eingesetzt. Diese besitzen eine gute Löslichkeit in den oben genannten Lösungsmitteln und sind mit den anderen Bestandteilen der Zinkstaubfarbe sehr gut vertäglich. Das Antiabsetzmittel wird in Mengen von etwa 1 bis 20 Gew.-%, bezogen auf die Menge des verwendeten Kieselsäureesters, zugesetzt. Vorzugsweise werden ca. 8 bis 15 Gew.-% zugesetzt.

Um die Härtungsreaktion zu beschleunigen, können dem erfindungsgemäßen Bindemittel bekannte Katalysatoren zugesetzt werden. Als solche Härtungskatalysatoren eignen sich besonders Alkanolamine, wie z.B. Monoethanolamin, Triethanolamin, Propanolamine. Sie werden gegebenenfalls in Mengen von etwa 0,5 bis 25 Gew.-%, bezogen auf die Menge des verwendeten Kieselsäureesters, zugesetzt.

Die Erfindung wird nachstehend anhand der Beispiele erläutert.

### Beispiel 1:

Es werden
448 Gew.-Teile Ethylsilikat (im Handel erhältlich als DYNASIL 40)
467 Gew.-Teile n-Butylacetat
180 Gew.-Teile Aromatengemisch (im Handel erhältlich als SOLVESSO 100)
60 Gew.-Teile Styrolacrylat
45 Gew.-Teile Diisopropanolamin
vermischt. In dieses Bindemittel werden 4800 Gew.-Teile Farbenzinkstaub eingeführt.
Der Zinkstaub hat eine mittlere Teilchengröße von 6 bis 7 Mikron und enthält Beimengungen von Glimmer, Chromoxid und Talkum in einer Gesamtmenge von 5 Gew.-%..

Das Gemisch ist über einen Zeitraum von mehr als 6 Monaten ohne Veränderung seiner Eigenschaften lagerfähig.

Eine Beschichtung mit dieser Mischung in einer Schichtdicke von 60 bis 70 Mikron ist bei einer relativen Luftfeuchtigkeit von 60% und einer Temperatur von 20°C in 6 bis 8 Minuten staubtrocken und erreicht nach 2 Stunden eine Härte entsprechend dem Erichsenstab von mehr als 150, nach 4 Stunden hat die Beschichtung eine Härte entsprechend dem Erichsenstab von 300, nach einem Tag von mehr als 500.

Der Flammpunkt des fertigen Bindemittels beträgt 23°C nach DIN 53213.

### Beispiel 2:

Es werden
120 Gew.-Teile Propylsilikat mit ca. 35 bis 40 Gew.-% SiO₂
107 Gew.-Teile n-Butylacetat
46 Gew.-Teile Aromatengemisch (im Handel erhältlich als SOLVESSO 100)
15 Gew.-Teile Styrolacrylat
12 Gew.-Teile Diisopropanolamin
vermischt. In dieses Bindemittel werden 1.200 Gew.-Teile Farbenzinkstaub gleicher Beschaffenheit und Zusammensetzung wie in Beispiel 1 eingeführt. Das Gemisch ist über einen Zeitraum von mehr als 6 Monaten ohne Veränderung seiner Eigenschaften lagerfähig.

Eine Beschichtung mit dieser Mischung in einer Schichtdicke von 60 bis 70 Mikron ist bei einer relativen Luftfeuchtigkeit von 60% und einer Temperatur von 20°C in 10 bis 12 Minuten staubtrocken und erreicht nach 2 Stunden eine Härte entsprechend dem Erichsenstab von 150, nach 4 Stunden hat die Beschichtung eine Härte entsprechend dem Erichsenstab von 250, nach einem Tag von 400 bis 500. Der Flammpunkt des fertigen Bindemittels beträgt 26°C nach DIN 53213.

### Beispiel 3 (Vergleichsbeispiel)

340 Gew.-Teile Ethylsilikat (im Handel erhältlich als DYNASIL 40)
300 Gew.-Teile Ethylenglykolmonoethylether
10 Gew.-Teile polymeres Butyltitanat
230 Gew.-Teile einer 25%igen Lösung eines Terpolymerisates aus Ethylacrylat, Ethyl- und Methylmethacrylat in Methylisobutylketon
45 Gew.-Teile Triethanolamin
75 Gew.-Teile BENTONE-Paste 34 = 10 Gew.-Teile BENTONE
   10 Gew.-Teile eines elektroneutralen Netz-, Schwebe- und Dispergiermittels (im Handel als ANTI-TERRA-U erhältlich)
   80 Gew.-Teile Benzin 100/140
werden vermischt. In dieses Bindemittel werden 4.000 Gew.-Teile Farbenzinkstaub eingeführt.
Der Zinkstaub hat eine mittlere Teilchengröße von 6 bis 7 Mikron und enthält Beimengungen von Glimmer, Chromoxid und Talkum in einer Gesamtmenge von 5 Gew.-%.

Das Gemisch ist über einen Zeitraum von mehr als 6 Monaten ohne Veränderung seiner Eigenschaften lagerfähig.

Eine Beschichtung mit dieser Mischung in einer Schichtdicke von 60 bis 70 Mikron ist bei einer relativen Luftfeuchtigkeit von 60% und einer Temperatur von 20°C in 10 Minuten staubtrocken und erreicht nach 90 Minuten eine Härte entsprechend einem Bleistift H. Nach 4 Stunden hat die Beschichtung eine Härte entsprechend dem Erichsenstab von 200, nach einem Tag von 300.
Der Flammpunkt des fertigen Binders beträgt 10°C nach DIN 53213.

## Patentansprüche

1. Bindemittel auf der Basis einer Mischung von Kieselsäureestern, Lösungsmitteln, Härtern und eines Antiabsetzmittels mit einem Flammpunkt der Mischung von mehr als 21 °C
dadurch gekennzeichnet,
daß die Mischung n-Butylacetat und Styrolcopolymere enthält.

2. Bindemittel nach Anspruch 1,
gekennzeichnet durch einen Gehalt an n-Butylacetat von 6 bis 60 Gew.-%, bezogen auf das Gesamtgewicht des Bindemittels.

3. Bindemittel nach Anspruch 1 oder 2,
dadurch gekennzeichnet,
daß als Lösungsmittel ein Gemisch aus n-Butylacetat und aromatischen Lösungsmitteln im Gewichtsverhältnis 1 : 5 bis 5 : 1 eingesetzt wird.

4. Bindemittel nach einem der Ansprüche 1 bis 3,
gekennzeichnet durch einen Lösungsmittelgehalt von 40 bis 70 Gew.-%, bezogen auf das Gesamtgewicht des Bindemittels.

5. Bindemittel nach einem der Ansprüche 1 bis 4,
gekennzeichnet durch einen Gehalt an Antiabsetzmittel von 1 bis 20 Gew.-%, bezogen auf die Menge des verwendeten Kieselsäureesters.

6. Bindemittel nach Anspruch 5,
gekennzeichnet durch einen Gehalt an Antiabsetzmittel von 8 bis 15 Gew.-%, bezogen auf die Menge des verwendeten Kieselsäureesters.

7. Verwendung von Bindemitteln nach einem der Ansprüche 1 bis 7 in zinkhaltigen Beschichtungsmassen.

## Claims

1. A binder based on a mixture of silicic esters, solvents, curing agents and an antisettling agent, the mixture having a flash point of above 21°C, characterized in that the mixture contains n-butyl acetate and styrene copolymers.

2. A binder according to claim 1, characterized by a content of n-butyl acetate of from 6 to 60 % by weight, based on the total weight of the binder.

3. A binder according to claim 1 or 2, characterized in that a mixture of n-butyl acetate and aromatic solvents in a weight ratio of from 1:5 to 5:1 is employed as solvent.

4. A binder according to any one of claims 1 to 3, characterized by a solvent content of from 40 to 70 % by weight, based on the total weight of the binder.

5. A binder according to any one of claims 1 to 4, characterized by a content of antisettling agent of from 1 to 20% by weight, based on the amount of the silicic esters used.

6. A binder according to claim 5, characterized by a content of antisettling agent of from 8 to 15% by weight, based on the amount of the silicic esters used.

7. Use of a binder according to any one of claims 1 to 6 in zinc-containing coating compositions.

## Revendications

1. Adhésif à base d'un mélange d'esters d'acide silicique, de solvants, de durcisseurs et d'un agent antiredéposition, avec un point de flamme de plus de 21°C,
caractérisé en ce que
le mélange renferme de l'acétate de n-butyle et un copolymère de styrène.

2. Adhésif selon la revendication 1,
caractérisé par
une teneur en acétate de n-butyle de 6 à 60 % en poids, rapporté au poids total de l'adhésif.

3. Adhésif selon la revendication 1 ou la revendication 2,
caractérisé en ce que
l'on met en oeuvre comme solvant un mélange d'acétate de n-butyle et de solvants aromatiques dans un rapport pondéral de 1:5 à 5:1.

4. Adhésif selon l'une des revendications 1 à 3,
caractérisé par
une teneur en solvant de 40 à 70 % en poids rapporté au poids total de l'adhésif.

5. Adhésif selon l'une des revendications 1 à 4,
caractérisé par
une teneur en agent antiredéposition de 1 à 20 % en poids rapporté à la quantité d'ester d'acide silicique utilisé.

6. Adhésif selon la revendication 5
caractérisé par
une teneur en agent antiredéposition de 8 à 15 % en poids rapporté à la quantité d'ester d'acide silicique utilisé.

7. Utilisation d'adhésifs selon l'une des revendications 1 à 6 dans les masses d'enduction contenant du zinc.
